# EUROPEAN PATENT APPLICATION

(11) **EP 4 737 886 A1**
(43) Date of publication of application: **06.05.2026**
(21) Application number: 24851329.3
(22) Date of filing: 24.04.2024
(51) Int. Cl.: G01N 21/64

(54) **OPTICAL MEASUREMENT DEVICE AND OPTICAL MEASUREMENT METHOD**

(30) Priority: 04.08.2023 JP 2023127635
(71) Applicant: Hamamatsu Photonics K.K., Hamamatsu-shi, Shizuoka 435-8558 (JP)
(72) Inventor: TAKESHITA Teruo, Hamamatsu-shi, Shizuoka 431-2103 (JP); KONDO Fusanori, Hamamatsu-shi, Shizuoka 435-8558 (JP); MATSUMURA Tomokazu, Hamamatsu-shi, Shizuoka 435-8558 (JP); ONODA Hirohisa, Hamamatsu-shi, Shizuoka 435-8558 (JP); MORISHITA Naokazu, Hamamatsu-shi, Shizuoka 435-8558 (JP); EJIRI Natsuki, Hamamatsu-shi, Shizuoka 435-8558 (JP); IWATA Naoki, Hamamatsu-shi, Shizuoka 435-8558 (JP)
(74) Representative: Grünecker Patent- und Rechtsanwälte PartG mbB
(86) International application number: PCT/JP2024/016141
(87) International publication number: WO 2025/032895

(57) **Abstract**

An optical measurement device 1 includes a timing generator 70, a light source 11, a detection optical system 20 that detects detection light including fluorescence and scattered light and outputs a detection signal, a frequency conversion circuit 45 that generates a difference frequency signal that is a signal of a frequency of a difference between a frequency related to the first frequency signal and a frequency related to the second frequency signal by multiplying the detection signal by the second frequency signal input from the timing generator 70, and a cancel circuit 60 that removes a signal component corresponding to the scattered light from the difference frequency signal based on the difference frequency signal and a third frequency signal. The third frequency signal is a signal of a frequency corresponding to the frequency related to the difference frequency signal.

## Description

### Technical Field

One aspect of the present invention relates to an optical measurement device and an optical measurement method.

### Background Art

Patent Literature 1 discloses a technique of irradiating a fluorescence sample placed on a substrate with excitation light and generating and subtracting an attenuation signal in order to remove a fluorescence noise component (a fluorescence component from the substrate) included when fluorescence is measured. Specifically, in Patent Literature 1, an attenuation signal having a phase equal to the fluorescence of the substrate is generated, and the fluorescence noise component is removed by subtracting the attenuation signal from the measured fluorescence signal.

### Citation List

### Patent Literature

Patent Literature 1: Japanese Unexamined Patent Publication No. 2010-518394

### Summary of Invention

### Technical Problem

As described above, in Patent Literature 1, a fluorescence noise component generated from a portion other than a measurement target portion of a sample is removed from fluorescence generated by irradiating the sample with excitation light. Here, as a noise component included when the sample is irradiated with light and light from the sample is detected, not only light (for example, fluorescence) generated from the sample (irradiated object) but also light (for example, scattered light) generated from the irradiation light (for example, excitation light) itself may be considered as a noise component. In the technique of Patent Literature 1, a case where the irradiation light itself becomes a noise component is not considered, and the noise component cannot be removed.

In addition, even in a case where the noise component of the irradiation light itself is removed by some method, for example, when the light emission time (light emission duration time) of the light from the sample is shortened to the nanosecond level, a circuit for processing the removal is also required to cope with a high-speed signal. For a high-speed signal of, for example, 10 MHz or more, it may be difficult to remove the noise component depending on the processing capability of the circuit to be used.

An aspect of the present invention has been made in view of the above circumstances, and an object of the present invention is to provide an optical measurement device and an optical measurement method capable of appropriately removing a noise component caused by irradiation light itself even when light emission time of light to be measured is short.

### Solution to Problem

An optical measurement device according to one aspect of the present invention includes: a timing generator configured to output a frequency signal; a light source unit configured to irradiate a sample with first light; a light source drive circuit configured to modulate and drive the light source unit based on a first frequency signal input from the timing generator; a light detection unit configured to detect detection light including second light generated from the sample irradiated with the first light and third light caused by the first light and having a phase equal to that of the first light, and output a detection signal; a frequency conversion circuit configured to calculate the detection signal and a second frequency signal input from the timing generator to generate a difference frequency signal that is a signal of a frequency of a difference between a frequency related to the first frequency signal and a frequency related to the second frequency signal; and a signal processing unit configured to remove a signal component corresponding to the third light from the difference frequency signal based on the difference frequency signal and a third frequency signal input from the timing generator, in which the third frequency signal is a signal having a frequency corresponding to a frequency related to the difference frequency signal.

In an optical measurement device according to an aspect of the present invention, detection light including second light and third light is detected, and a detection signal corresponding to the detection light and a second frequency signal are calculated to generate a difference frequency signal between the first frequency signal and the second frequency signal. Conventionally, there is known a method of removing a noise component caused by irradiation light (first light) itself by removing a phase component of third light from a detection signal of detection light including second light and the third light. Here, as a result of shortening the light emission time of light to be measured, in a case where the speed of the signal processed by the circuit is increased, for example, in a case where the signal becomes a high speed signal of 10 MHz or more, the noise component may not be appropriately removed only by the above-described method depending on the processing capability of the circuit to be used. In this regard, in the optical measurement device according to one aspect of the present invention, the detection signal and the second frequency signal are calculated to generate a difference frequency signal between the first frequency signal and the second frequency signal. Such a difference frequency signal is a sufficiently low-speed signal compared to the detection signal. Then, by inputting the difference frequency signal and the third frequency signal to the signal processing unit, a signal component (that is, a noise component caused by the irradiation light itself) corresponding to the third light is removed from the difference frequency signal. As described above, the frequency conversion is performed on the detection signal, and the noise component caused by the irradiation light itself is removed from the difference frequency signal after the frequency conversion, whereby the noise component can be appropriately removed even when the light emission time of the light to be measured is short.

The first light may be excitation light for exciting the sample, the second light may be fluorescence emitted by the sample according to the excitation light, and the third light may include at least one of the excitation light and scattered light of the excitation light. As a result, the signal component corresponding to at least one of the excitation light and the scattered light of the excitation light can be appropriately removed from the difference frequency signal corresponding to the detection signal including the fluorescence and the signal component corresponding to at least one of the excitation light and the scattered light of the excitation light, and only the signal component corresponding to the fluorescence can be appropriately extracted.

The frequency related to the difference frequency signal may be a frequency within a range of 10 Hz to 1 MHz. By setting the frequency of the difference frequency signal within such a range, it is possible to suppress an increase in the frequency related to noise removal and to appropriately remove a noise component.

The optical measurement device may further include a first frequency filter provided on an input side of the frequency conversion circuit and a second frequency filter provided on an output side of the frequency conversion circuit, and the first frequency filter and the second frequency filter may be band pass filters. In this manner, by providing the frequency filter on the input/output side of the frequency conversion circuit, it is possible to suppress noise from being included in the detection signal, the second frequency signal, and the difference frequency signal. Furthermore, by using the band pass filter, only a desired frequency band can be selectively passed, and the inclusion of noise can be more appropriately suppressed.

An optical measurement method according to one aspect of the present invention includes: irradiating a sample with first light based on a first frequency signal; detecting detection light including second light generated from the sample irradiated with the first light and third light caused by the first light and having a phase equal to that of the first light, and outputting a detection signal; generating a difference frequency signal that is a signal of a frequency of a difference between a frequency related to the first frequency signal and a frequency related to the second frequency signal by calculating the detection signal and the second frequency signal; and removing a signal component corresponding to the third light from the difference frequency signal based on the difference frequency signal and a third frequency signal, in which the third frequency signal is a signal having a frequency corresponding to a frequency related to the difference frequency signal.

### Advantageous Effects of Invention

According to one aspect of the present invention, it is possible to provide an optical measurement device and an optical measurement method capable of appropriately removing a noise component caused by irradiation light itself even when light emission time of light to be measured is short.

### Brief Description of Drawings

FIG. 1 is a schematic configuration diagram of an optical measurement device according to an embodiment of the present invention.
FIG. 2 is a diagram for explaining a phase difference between fluorescence and scattered light.
FIG. 3 is a diagram for explaining a method of canceling scattered light.
FIG. 4 is a diagram for explaining a fluorescence measurement method.
FIG. 5 is a diagram for explaining removal of a noise component.
FIG. 6 is a view schematically illustrating a sample.
FIG. 7 is a diagram for explaining a definition of S/N.
FIG. 8 is a diagram for explaining signals used in calibration processing.
FIG. 9 is a diagram for explaining calibration processing.
FIG. 10 is a diagram for explaining details of fluorescence intensity in each region of a sample.
FIG. 11 is a flowchart illustrating calibration processing.
FIG. 12 is a diagram for explaining fluorescence excitation spectra of europium and an organic fluorescent dye (FITC).
FIG. 13 is a diagram for explaining an effect of appropriately removing scattered light (noise).
FIG. 14 is a diagram for explaining a device configuration according to a modification.

### Description of Embodiments

Hereinafter, an embodiment of the present invention will be described in detail with reference to the drawings. In the drawings, the same or corresponding parts are denoted by the same reference numerals, and redundant description will be omitted.

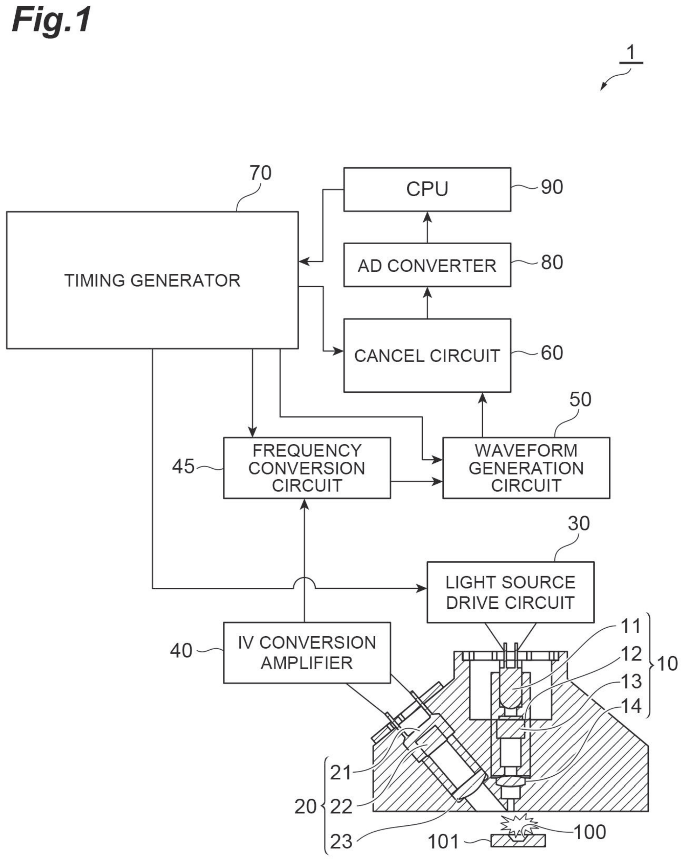

FIG. 1 is a schematic configuration diagram of an optical measurement device 1 according to the present embodiment. The optical measurement device 1 is a device that detects light generated from a sample according to light irradiated to the sample. In the present embodiment, the optical measurement device 1 will be described as a fluorescence measurement device that detects fluorescence generated from a sample according to excitation light irradiated to the sample. The excitation light is light for exciting the sample, and the fluorescence is light emitted from the sample according to the excitation light, and is light having a wavelength different from that of the excitation light. Furthermore, in the present embodiment, the optical measurement device 1 will be described as a device that detects fluorescence related to measurement using immunochromatography. The immunochromatography is an immunoassay using an antigen-antibody reaction, and is used, for example, for detection of an influenza virus.

As shown in FIG. 1, in the measurement using immunochromatography, an immunochromatography test piece 100 is prepared as a sample. The immunochromatography test piece 100 contains an immunochromatographic membrane to be measured in a reagent holder 101. A capture antibody against a predetermined antigen (for example, an antibody against an influenza virus antigen) is immobilized on a specific position (measurement target portion) of the immunochromatographic membrane of the immunochromatography test piece 100. The reagent holder 101 is provided with a specimen spotting window which is an opening for dropping a specimen onto the immunochromatographic membrane, and a measurement window which is an opening for measuring a measurement target portion on which the capture antibody is immobilized. When the specimen is dropped onto the specimen spotting window of the reagent holder 101, the antigen in the specimen first binds to the detection antibody labeled with the fluorescent reagent, and then causes an antigen-antibody reaction with the capture antibody to be trapped. The optical measurement device 1 irradiates an immunochromatographic membrane exposed from a measurement window of the immunochromatography test piece 100 with excitation light, and detects fluorescence from an antigen-antibody complex (in particular, fluorescent reagents of antibodies) in a measurement target portion, thereby measuring fluorescence intensity. As the fluorescent reagent, for example, europium, Q-dot (registered trademark), an organic fluorescent dye, or the like can be used. In particular, examples of the fluorescent reagent having a short light emission time of light (fluorescence) to be measured (the fluorescence lifetime is as short as several nanoseconds to several tens of nanoseconds) include organic fluorescent dyes such as fluorescein isothiocyanate (FITC).

Here, it is conceivable that the detection light incident on and detected by a detection optical system 20 described later in the optical measurement device 1 includes not only fluorescence but also light caused by the excitation light itself. Examples of such light include scattered light of excitation light. Such scattered light is, for example, a part of excitation light generated by irradiating the immunochromatography test piece 100 with excitation light and scattering the excitation light, and is light having a phase substantially equal to that of the excitation light. Since the immunochromatographic membrane of the immunochromatography test piece 100 and the reagent holder 101 are generally white, the above-described scattered light is likely to occur. In addition, the excitation light itself may be detected depending on the arrangement of the sample to be measured and the detection optical system. In the following description, it is assumed that the detection light detected by the optical measurement device 1 includes fluorescence and scattered light.

As illustrated in FIG. 1, the optical measurement device 1 includes an irradiation optical system 10 (light source unit), a detection optical system 20 (light detection unit), a light source drive circuit 30, an I-V conversion amplifier 40, a frequency conversion circuit 45, a waveform generation circuit 50, a cancel circuit 60 (signal processing unit), a timing generator 70, an AD converter 80, and a CPU 90.

The irradiation optical system 10 irradiates the immunochromatography test piece 100 with excitation light. The irradiation optical system 10 includes a light source 11, an aperture 12, an excitation light filter 13, and a collimator lens 14. The light source 11 irradiates the immunochromatography test piece 100 (sample) with excitation light (first light). As the light source 11, one having a response speed faster than the modulation frequency is used, and in the present embodiment, one corresponding to a high-speed drive signal of, for example, 10 MHz or more is preferable. Such a light source 11 is, for example, a semiconductor light emitting element such as a laser diode (LD). In the present embodiment, the light source 11 is described as an LD, but is not limited thereto, and may be a light emitting diode (LED) or a super luminescent diode (SLD). The aperture 12 is a light flux shaping member for shaping the light emitted from the light source 11 into light having a desired light flux cross section. The excitation light filter 13 is a wavelength selection filter that filters a wavelength necessary for excitation with respect to the excitation light arriving via the aperture 12. The excitation light filter 13 is, for example, an optical filter such as a dielectric multilayer film filter or a color glass filter, and more specifically, is a band pass filter including a dielectric multilayer film filter that transmits only a specific wavelength band (excitation wavelength of the fluorescent reagent). The collimator lens 14 is a lens that forms an image of the excitation light filtered by the excitation light filter 13 on the immunochromatography test piece 100 (specifically, the measurement target portion of the immunochromatographic membrane).

The detection optical system 20 detects fluorescence from the immunochromatography test piece 100. However, practically, detection light that is light including also scattered light caused by the above-described excitation light itself in addition to fluorescence from the immunochromatography test piece 100 (fluorescence from the measurement target portion of the immunochromatographic membrane) is incident on the detection optical system 20, and the detection light is detected. The detection optical system 20 includes a light detection element 21, a fluorescent filter 22, and a condenser lens 23. The detection light is condensed by the condenser lens 23 and enters the light detection element 21 through the fluorescent filter 22. The fluorescent filter 22 is a wavelength selection filter provided to suppress light other than fluorescence from reaching the light detection element 21 with respect to the detection light from the immunochromatography test piece 100. The fluorescent filter 22 is, for example, an optical filter such as a dielectric multilayer film filter or a color glass filter, and more specifically, is a band pass filter combining a dielectric multilayer film filter that transmits only a specific wavelength band and a color glass filter. However, for example, when the excitation light wavelength and the fluorescence wavelength are close to each other, it is difficult to efficiently block only the scattered light having the excitation light wavelength while appropriately transmitting the fluorescence having the fluorescence wavelength by the fluorescent filter 22. In general, a dielectric multilayer film filter generally used as an efficient wavelength selection filter has characteristics that change depending on an incident angle of light. Therefore, in the present embodiment, the fluorescent filter 22 is configured by a combination of a dielectric multilayer film filter and a color glass filter, so that scattered light from an oblique direction is effectively blocked by the color glass filter. However, it is still difficult to obtain a sufficient effect only by wavelength selection, and it is difficult to efficiently prevent entry of scattered light having various conditions. In the following description, it is assumed that scattered light is included in the detection light reaching the light detection element 21 also by providing the fluorescent filter 22.

The light detection element 21 is an optical sensor that detects detection light filtered by the fluorescent filter 22. The light detection element 21 preferably corresponds to, for example, a nanosecond level emission time, and is, for example, an electron tube element such as a photomultiplier tube (PMT). A control circuit (not illustrated) is connected to the photomultiplier tube, and the control circuit includes a high-voltage power supply, a gain adjustment circuit that adjusts power supplied to the electron multiplier, and the like. In the present embodiment, the light detection element 21 is described as a photomultiplier tube, but is not limited thereto, and may be a semiconductor light receiving element such as a silicon photomultiplier (SiPM), an avalanche photodiode (APD), or a photodiode (PD), and an electron tube, an image sensor, or a camera using the element as long as it can respond at a high speed in accordance with the modulation frequency of the excitation light from the light source 11 described later. Specifically, the light detection element 21 detects detection light including fluorescence (second light) generated from the immunochromatography test piece 100 irradiated with excitation light (specifically, a fluorescent reagent of an antigen-antibody complex in a measurement target portion of the immunochromatographic membrane) and the above-described scattered light (third light) which is light caused by the excitation light and has no phase difference with the excitation light. The light detection element 21 outputs a detection signal corresponding to the detection light to the I-V conversion amplifier 40.

The light source drive circuit 30 is a circuit that modulates and drives the light source 11 by outputting a drive current to the light source 11. The light source drive circuit 30 receives an input of a sinusoidal frequency signal (first frequency signal) serving as a reference from the timing generator 70 that outputs the frequency signal. The light source drive circuit 30 modulates the frequency of the drive current based on the input reference frequency signal. That is, the light source drive circuit 30 sets the modulation frequency of the light source 11 that outputs the excitation light. In response to this, the frequency of the excitation light output from the light source 11 is modulated, and the light amount (excitation light amount) from the light source 11 changes sinusoidally. The modulation frequency may be determined based on the fluorescence lifetime of the fluorescent reagent to be used. For example, the modulation frequency may be about 1 kHz when europium having a fluorescence lifetime of several milliseconds is used as the fluorescent reagent, the modulation frequency may be about 1 MHz when Q-dots having a fluorescence lifetime of several 10 nanoseconds are used, and the modulation frequency may be about 10 MHz when an organic fluorescent dye having a fluorescence lifetime of several nanoseconds to several tens of nanoseconds is used. In the present embodiment, it is described that an organic fluorescent dye is used as the fluorescent reagent, and it is described that the modulation frequency (frequency related to the first frequency signal) is 10.01 MHz.

In general, the fluorescence lifetime is the time until the fluorescence intensity falls from the peak value to 1/e (about 37%). When calculated back from the definition of the fluorescence lifetime, for example, it is considered that the optimum modulation frequency in the case of using europium having a fluorescence lifetime of several milliseconds is 1 kHz, and the optimum modulation frequency in the case of using an organic fluorescent dye having a fluorescence lifetime of several nanoseconds to several tens of nanoseconds is preferably about 100 MHz to 1 GHz. However, when the signal output derived from fluorescence with respect to the modulation frequency was actually measured using the europium reagent, it was found that the fluorescence intensity was higher and the ratio of the fluorescence signal with respect to the excitation light was also larger when modulation was performed at a frequency lower than the frequency determined from the fluorescence lifetime. Specifically, the fluorescence intensity could be increased by defining the fluorescence lifetime as "the time until the peak value of the fluorescence intensity falls to 1%" instead of 1/e and obtaining the modulation frequency from the time. In the case of an organic fluorescent dye, the fluorescence lifetime is nanoseconds, and the modulation frequency of the light source 11 determined from this is about 10 MHz (10.01 MHz in the present embodiment).

The I-V conversion amplifier 40 converts a current signal (detection signal) output from the light detection element 21 into a voltage signal. The I-V conversion amplifier 40 outputs the detection signal converted into the voltage signal to the frequency conversion circuit 45.

The frequency conversion circuit 45 multiplies (calculates) the detection signal output from the I-V conversion amplifier 40 and a sine wave or rectangular wave frequency signal (second frequency signal) as a reference input from the timing generator 70, thereby generating a difference frequency signal that is a signal of a frequency (that is, 10 kHz) of a difference between the frequency (that is, 10.01 MHz) related to the first frequency signal and the frequency (here, 10.00 MHz) related to the second frequency signal.

Here, description is made assuming that the frequency related to the difference frequency signal is 10 kHz, but the present invention is not limited thereto. For example, the first frequency signal and the second frequency signal may be set such that the frequency related to the difference frequency signal is 10 Hz to 1 MHz, preferably 100 Hz to 500 kHz. In addition, here, it has been described that the frequency related to the first frequency signal is higher than the frequency related to the second frequency signal by 10 kHz, but conversely, the frequency related to the second frequency signal may be higher than the frequency related to the first frequency signal. That is, the first frequency signal and the second frequency signal may be set such that the frequency related to the difference frequency signal generated by multiplying the first frequency signal and the second frequency signal is 10 Hz to 1 MHz, preferably 100 Hz to 500 kHz. By setting the frequency related to the difference frequency signal to 10 Hz or more, it is possible to suppress that the frequency related to the difference frequency signal becomes too low and a high-speed change of the sample cannot be detected. In addition, by setting the frequency related to the difference frequency signal to 1 MHz or less, it is possible to reliably suppress that the frequency related to noise removal becomes high and noise removal cannot be appropriately performed. The frequency conversion circuit 45 outputs the generated difference frequency signal to the waveform generation circuit 50.

The waveform generation circuit 50 is a circuit that generates a waveform of the difference frequency signal based on the difference frequency signal output from the frequency conversion circuit 45. The waveform generation circuit 50 receives an input of a frequency signal (third frequency signal) having a sine wavelength as a reference from the timing generator 70. The third frequency signal is a signal having a frequency corresponding to the frequency related to the difference frequency signal (the same as the frequency related to the difference frequency signal). That is, here, the third frequency signal is a signal of 10 kHz. In addition, the third frequency signal is a signal indicating a phase of excitation light (that is, scattered light). Such a phase of the excitation light is used in processing in the cancel circuit 60. The waveform generation circuit 50 outputs information of the generated waveform (difference frequency signal) to the cancel circuit 60.

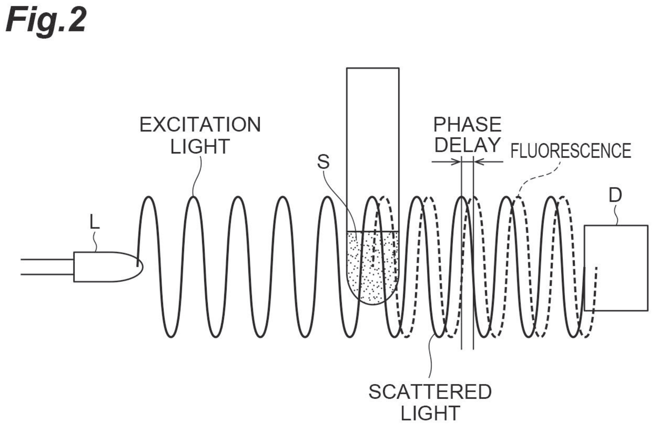

The cancel circuit 60 is a signal processing unit that removes a signal component corresponding to the scattered light from the difference frequency signal based on the waveform (difference frequency signal) generated by the waveform generation circuit 50 and the frequency signal (third frequency signal) input from the timing generator 70. The cancel circuit 60 removes a signal component corresponding to the scattered light from the difference frequency signal based on a phase difference (phase difference) between the fluorescence and the scattered light. The cancel circuit 60 receives an input of a reference frequency signal (third frequency signal) from the timing generator 70, thereby acquiring phase information of the excitation light (that is, scattered light). As a result, the signal component of the scattered light based on the phase difference between the fluorescence and the scattered light can be removed in the cancel circuit 60. Details of the processing of the cancel circuit 60 will be described with reference to FIGS. 2 to 4.

FIG. 2 is a conceptual diagram illustrating a phase difference between fluorescence and scattered light. As illustrated in FIG. 2, the sinusoidal detection light (detection light detected by the light detection unit D) from the sample S irradiated with the sinusoidal excitation light from the light source unit L includes the sinusoidal scattered light and fluorescence. Note that the excitation light from the light source unit L is not limited to the sinusoidal excitation light, may have a periodic modulation waveform such as a rectangular wave, and in this case, the detection light (scattered light and fluorescence) also has a periodic modulation waveform similar to that of the excitation light. Then, while the scattered light is light having no phase difference with the excitation light, the fluorescence is light generated from the sample S according to the excitation light, and is detected with a phase delay of about several 10 milliseconds to nanoseconds with respect to the scattered light. Focusing on such a phase difference, the present inventors have found a method of removing only scattered light from detection light and extracting only fluorescence. In the present embodiment, as described above, the scattered light component is removed from not the detection light but the difference frequency signal obtained by frequency-converting the detection light.

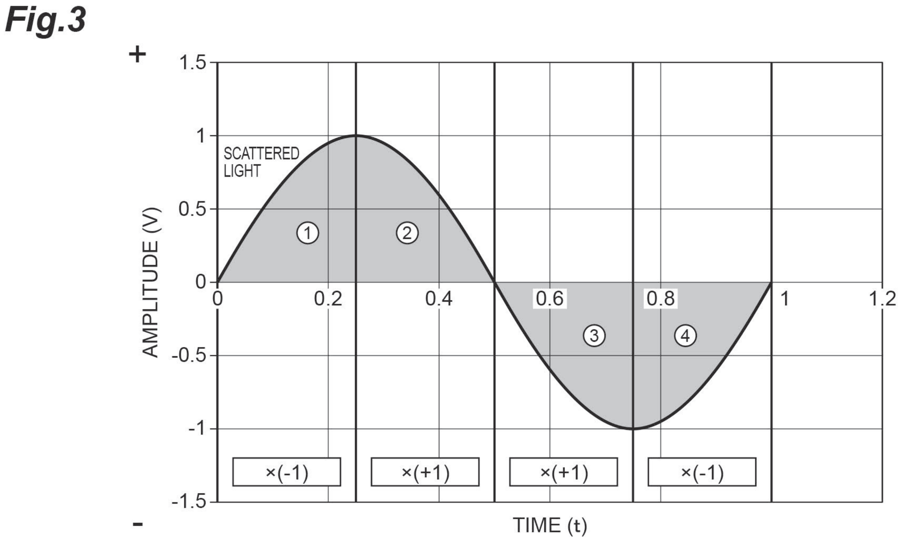

FIG. 3 is a diagram for explaining a scattered light removal (cancel) method. FIG. 3 illustrates only a waveform of scattered light in the difference frequency signal. Note that this waveform is equal to the waveform of the excitation light. In FIG. 3, the horizontal axis represents time, and the vertical axis represents amplitude. When the waveform according to the phase of the scattered light illustrated in FIG. 3 is separated, for example, in a time unit of 1/4 of one cycle (time region is separated) and integrated for each of time regions 1 to 4, the output of the scattered light in each of the time regions 1 to 4 can be obtained. Here, the sum of the outputs can be set to 0 by multiplying each integral value of each of the time regions 1 to 4 by a certain multiplier and adding them all. That is, the absolute value of the output in each of the time regions 1 to 4 is the same, the range of the amplitudes in the time regions 1 and 2 is positive, and the range of the amplitudes in the time regions 3 and 4 is negative. As illustrated in FIG. 3, when the time region 1 is multiplied by the multiplier "-1" and amplified, the output in the time region 1 has a negative value of "positive × negative". When the time region 2 is multiplied by the multiplier "+1" and amplified, the output in the time region 2 has a positive value of "positive × positive". When the time region 3 is multiplied by the multiplier "+1" and amplified, the output in the time region 3 has a negative value of "negative × positive". When the time region 4 is multiplied by the multiplier "-1" and amplified, the output in the time region 4 has a positive value of "negative × negative". Therefore, when all the integral values of the time regions 1 to 4 amplified by multiplying the predetermined multiplier are added, the values are canceled out, and the sum of the outputs becomes 0. As described above, the signal components corresponding to the scattered light can be separated in a predetermined time unit corresponding to the phase of the scattered light, the separated components can be amplified, and the amplified components can be combined to be removed (the output can be set to 0).

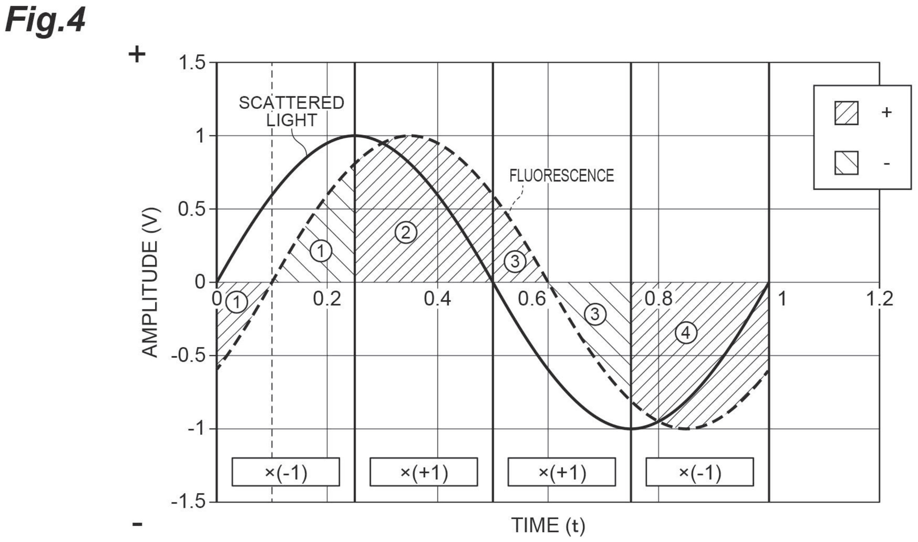

FIG. 4 is a diagram for explaining a fluorescence measurement method. FIG. 4 illustrates waveforms of scattered light and fluorescence included in the difference frequency signal. In FIG. 4, the horizontal axis represents time, and the vertical axis represents amplitude. As described above, the signal components corresponding to the scattered light can be separated in a predetermined time unit corresponding to the phase of the scattered light, the separated components can be amplified, and the amplified components can be combined to be removed (the output can be set to 0). Here, as illustrated in FIG. 4, since fluorescence has a phase difference with respect to scattered light, when separation is performed in a predetermined time unit according to the phase of scattered light, the integral values of the time regions 1 to 4 do not have the same value, and thus a value obtained by multiplying, amplifying, and adding the multiplied values by a multiplier similar to that of the scattered light is not 0 and output. As described above, the scattered light and the fluorescence are separated into the same time region, amplified, and combined, whereby the output intensity of the fluorescence can be detected and output while removing the signal component of the scattered light.

As described above, the cancel circuit 60 separates the difference frequency signal in a predetermined time unit corresponding to the phase of the scattered light, amplifies each component of the separated detection signal, and combines the amplified components, thereby removing a signal component corresponding to the scattered light from the difference frequency signal, and obtaining a signal component of fluorescence. The cancel circuit 60 outputs a fluorescence signal, which is a signal obtained by removing a signal component corresponding to scattered light (that is, a signal including only a signal component of fluorescence), to the AD converter 80. Note that, although the time of 1/4 of one cycle is exemplified as the predetermined time unit, the predetermined time unit is not limited thereto, and any time unit may be used as long as a signal component corresponding to scattered light can be removed after combination. In addition, although "+1" and "-1" have been exemplified as multipliers in amplification, the multipliers are not limited thereto, and any multiplier may be used as long as a signal component corresponding to scattered light can be removed after combination.

The AD converter 80 performs AD conversion on the fluorescence signal output from the cancel circuit 60 to convert the fluorescence signal into a digital value, and outputs the digital value to the CPU 90. The CPU 90 performs predetermined control and signal processing on the digital signal (fluorescence signal) output from the AD converter 80. The CPU 90 may transfer the signal processing result to an external computer by, for example, serial communication. In addition, the CPU 90 may generate a signal output from the timing generator 70, that is, a signal for determining various operation timings in the optical measurement device 1, and output the signal to the timing generator 70. An FPGA may be used instead of the CPU 90. Through the above processing, the optical measurement device 1 can remove the influence of the scattered light from the detection light and obtain only the signal related to the fluorescence of the fluorescent reagent.

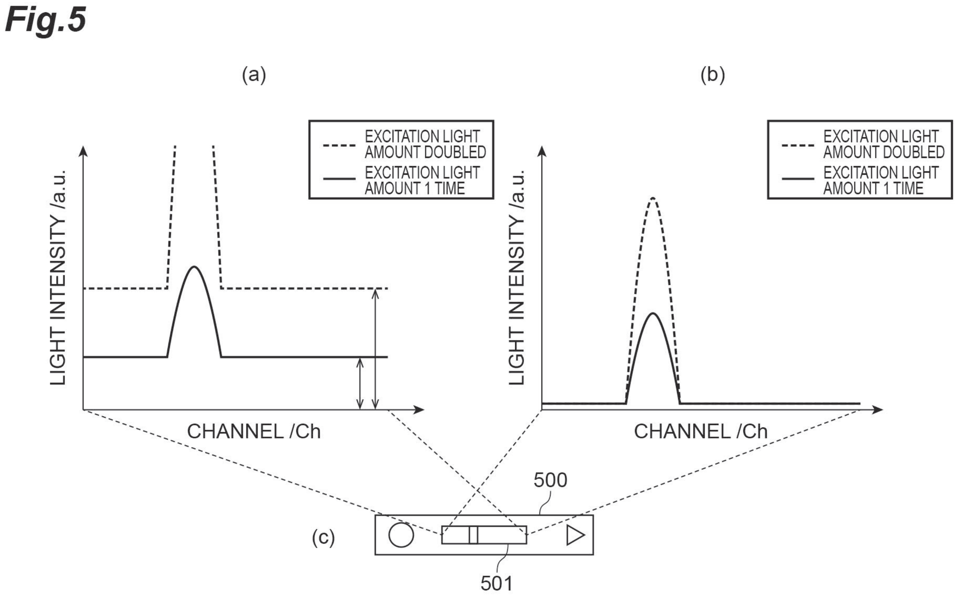

Next, removal of a specific signal component (noise) described in the above-described embodiment will be described more specifically with reference to FIGS. 5 to 11.

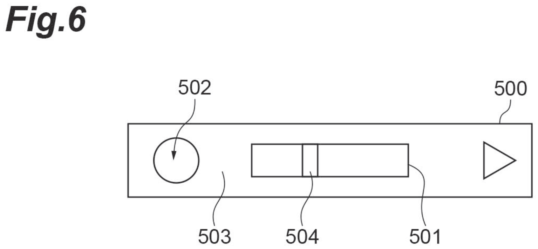

FIG. 5 is a diagram for explaining removal of a noise component. FIG. 5(a) illustrates the intensity of the detection light in a case where the signal component (noise) corresponding to the scattered light caused by the excitation light is not removed, and FIG. 5(b) illustrates the intensity of the detection light in a case where the signal component (noise) corresponding to the scattered light caused by the excitation light is removed. In FIGS. 5(a) and 5(b), the vertical axis represents the intensity of the detection light, and the horizontal axis represents a channel indicating a position in the measurement unit 501 which is a measurement area of the sample 500. One channel is, for example, 0.02 mm. FIG. 5(c) is a diagram illustrating a region of the sample 500 corresponding to the channel positions in FIGS. 5(a) and 5(b). FIG. 6 is an enlarged schematic view of the sample 500 illustrated in FIG. 5(c). As shown in FIG. 6, in the sample 500, a dropping unit 502 to which a specimen is dropped, a holding unit 503 that holds a detection antibody labeled with a fluorescent reagent, and a measurement unit 501 that fixes a capture antibody to a measurement target portion 504 are arranged from upstream to downstream. The fluorescent reagent is, for example, FITC. For example, since the measurement unit 501 is a part of a white immunochromatographic membrane, the excitation light is easily scattered.

When the specimen is dropped on the dropping unit 502 with respect to such a sample 500, the specimen moves to the downstream side by a capillary phenomenon. When there is a substance to be detected in the specimen, the detection antibody of the holding unit 503 and the substance to be detected react with each other to form a complex, and the complex moves to the downstream side through the measurement unit 501. Then, when the complex reaches the measurement target portion 504 on the measurement unit 501, the complex is captured by the capture antibody of the measurement target portion 504, and a complex of the substance to be detected, the detection antibody, and the capture antibody is formed. In this state, the measurement unit 501 as the measurement area is irradiated with the excitation light while changing the condensing position (channel), whereby the detection light intensity for each channel as illustrated in FIGS. 5(a) and 5(b) can be derived. In FIGS. 5(a) and 5(b), the channel in which the detection light intensity is larger than the other channels is the channel corresponding to the position of the measurement target portion 504 where the complex is captured.

As illustrated in FIG. 5(a), in a case where the signal component (noise) corresponding to the scattered light is not removed, the detection light includes not only the fluorescence but also the scattered light, and thus, the detection light intensity increases. Since such noise increases as the excitation light amount increases, when the excitation light amount is doubled as illustrated in FIG. 5(a), the noise is also similarly doubled. In general, as a method of improving the S/N, a method of increasing the amount of fluorescence signal by increasing the excitation light amount can be considered. However, as described above, in an aspect in which noise also increases according to the excitation light amount as illustrated in FIG. 5(a), it is difficult to improve the S/N. Furthermore, there is also a problem that the dynamic range is narrowed by increasing the excitation light amount.

On the other hand, as illustrated in FIG. 5(b), in a case where a signal component (noise) corresponding to scattered light is removed, detection light generally includes only fluorescence, and only a signal desired to be detected (signal based on fluorescence) can be detected. In this case, since the noise is substantially 0, as illustrated in FIG. 5(b), even if the excitation light amount is increased (for example, doubled), as long as a light detector is not saturated, the influence of the excitation light (scattered light) can be canceled to substantially 0 and the noise does not become extremely large. As described above, in the configuration in which the noise is removed as illustrated in FIG. 5(b), only the signal component can be increased in a state in which the noise component is canceled to substantially 0 when the excitation light is increased, thus leading to improvement of the S/N. Since this configuration can cancel the influence of the excitation light (scattered light) to substantially 0, it is possible to increase the excitation light amount and to increase the multiplication factor of the I-V conversion amplifier and the photomultiplier tube. Thereby, only the signal component can be increased. Here, for convenience of description, it has been described that the noise component is removed from the detection light, but specifically, as described above, the noise component is removed from the difference frequency signal obtained by frequency-converting the detection light.

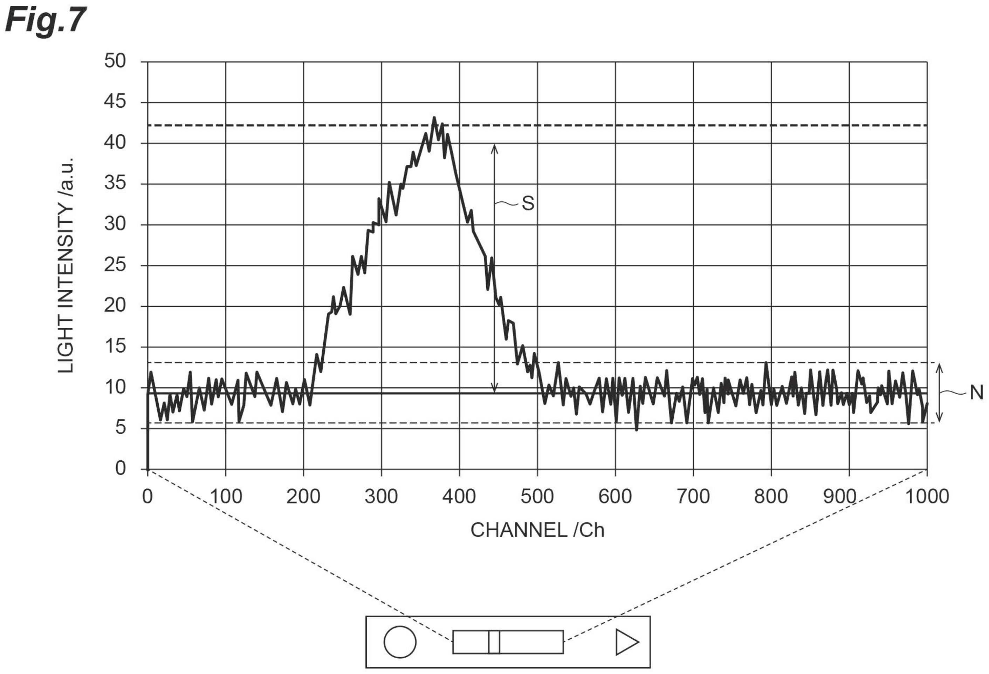

FIG. 7 is a diagram for explaining a definition of S/N. FIG. 7 illustrates an example of the intensity of the detection light for each channel (the intensity of the detection light at each position in the measurement area). As illustrated in FIG. 7, a fluctuation component of about ±4 exists near the intensity 10 count of the detection light. Such fluctuation (standard deviation) of the base light amount is a value acquired by scanning the measurement unit 501 (alternatively, the measurement unit 501 in a wet state similar to the measurement state) to which no fluorescent substance or the like is applied with the excitation light. Hereinafter, the fluctuation in the base light amount is defined as noise N. The signal S is defined as "value obtained by subtracting average value of noise component excluding position of measurement target portion 504 in all channels from peak fluorescence intensity of the measurement target portion 504". The S/N is defined as a value obtained by dividing the signal S defined above by the noise N.

Note that, in the example illustrated in FIG. 7, the value of the noise N is offset by about 10 count. In principle, the value of the noise N is canceled to substantially 0 by performing calibration processing to be described later. However, although the background according to the value of the noise N varies, it is preferable that the signal always has a positive value from the viewpoint of analysis with software, and thus background offset processing is performed. Note that the offset amount is set such that the signal falls within the dynamic range (within 0 to 4096 count). The offset amount is reduced as much as possible from the viewpoint of the dynamic range, and is set such that a background signal obtained by scanning the measurement unit 501 with the excitation light always (almost reliably) has a positive value. Specifically, the offset amount may be, for example, an intensity average value of the detection light acquired by scanning the measurement unit 501 (alternatively, the measurement unit 501 in a wet state similar to the measurement state) to which no fluorescent substance or the like is applied with the excitation light + a value of 6σ of the intensity average value. Note that an appropriate margin may be added to the offset amount calculated above to obtain the final offset amount in preparation for a case where unexpected external noise jumps into the circuit system. The offset amount is selected so that the dynamic range is not sacrificed and the signal is not output negatively, and may be, for example, about +20 count.

Next, a method of removing a signal component (noise) corresponding to scattered light will be specifically described. In the optical measurement device 1, calibration processing is performed in the cancel circuit 60 which is a lock-in circuit, and a signal component (noise) corresponding to scattered light is removed from the difference frequency signal in consideration of the execution result of the calibration processing.

Specifically, in the optical measurement method using the optical measurement device 1, first, the optical head of the irradiation optical system 10 is disposed such that the excitation light is emitted to a portion other than the measurement target portion 504 of the sample 500. Subsequently, scattered light (excitation light components scattered to the measurement unit 501 or the like) obtained by irradiating the measurement unit 501 or the like with the excitation light from the irradiation optical system 10 is detected by the detection optical system 20. Here, the light detected by the detection optical system 20 is basically only scattered light not including fluorescence in at least the measurement target portion 504, and is calibration processing light used for calibration processing.

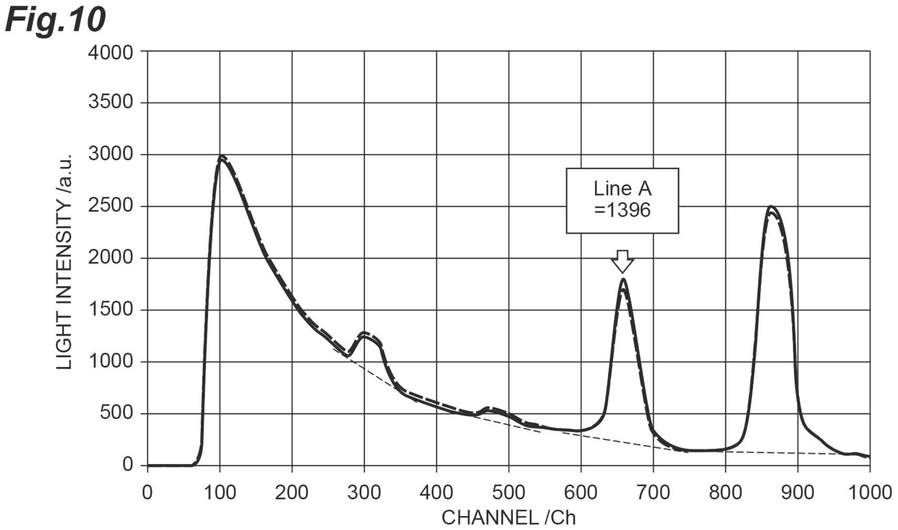

Acquisition of the calibration processing light will be described in more detail. The calibration processing light may be detected by irradiating an area on the downstream side of the capture antibody immobilized on the measurement target portion 504 in the sample 500 with the excitation light. FIG. 10 is a diagram illustrating fluorescence intensity in each region of the sample 500. In FIG. 10, a portion indicated by "Line A" indicates a portion of the measurement target portion 504. In the description of FIG. 5(a), FIG. 5(b), and the like, the fluorescence intensity of the portion other than the measurement target portion 504 is shown to be small for convenience of description, but actually, as shown in FIG. 10, the fluorescence intensity tends to increase even if the capture antibody is not present on the upstream side where the specimen is dropped. Therefore, it is preferable that the calibration processing light desired to include only scattered light is detected by irradiating an area on the downstream side of the capture antibody immobilized on the measurement target portion 504 in the sample 500 with excitation light. Note that the acquisition of the calibration processing light may be performed using a case accommodating an immunochromatographic membrane or a separately prepared member for calibration processing in addition to the measurement unit 501 in the sample 500.

Subsequently, calibration processing is performed. Specifically, the cancel circuit 60 of the optical measurement device 1 performs calibration processing for removing a signal component corresponding to scattered light from the difference frequency signal on the basis of the calibration signal corresponding to the calibration processing light described above. Details of the calibration processing will be described later. Then, after the calibration processing is completed, the optical head of the irradiation optical system 10 scans the measurement area (measurement unit 501) of the sample 500 to acquire fluorescence information of the measurement unit 501. Specifically, the cancel circuit 60 acquires the fluorescence information by removing the signal component corresponding to the scattered light from the difference frequency signal in consideration of the execution result of the above-described calibration processing.

Next, details of the calibration processing will be described. The cancel circuit 60 of the optical measurement device 1 is, for example, a lock-in circuit using a field programmable gate array (FPGA). In the calibration processing, the cancel circuit 60 generates a lock-in switch signal whose phase is shifted with respect to a periodic signal that makes a period at an operation frequency of the cancel circuit 60 in accordance with a modulation frequency (for example, a frequency of a direct digital synthesizer (DDS)) of the light source 11 set by the light source drive circuit 30. Then, the cancel circuit 60 functioning as a lock-in circuit receives, as an input, a calibration signal as a measurement signal and a switch signal as a reference signal, outputs a signal component corresponding to scattered light, and adjusts a phase of the switch signal such that a voltage value of the signal component corresponding to the scattered light falls within a predetermined range (threshold level) approximating 0.

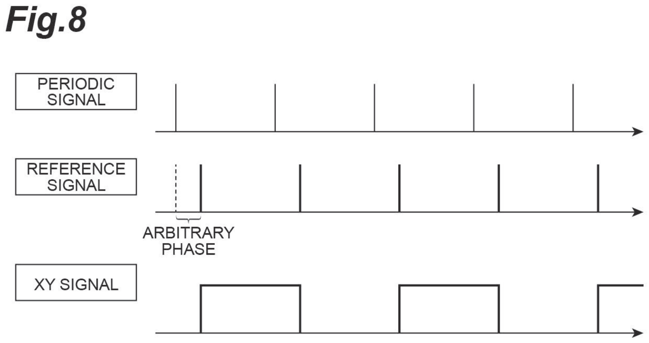

FIG. 8 illustrates signals used for the calibration processing in the FPGA of the cancel circuit 60. The periodic signal illustrated in FIG. 8 is a clock signal that intervals a period in accordance with the frequency of the DDS as described above. The reference signal is a signal having the same frequency as the periodic signal at an arbitrary phase from the periodic signal (phase is shifted with respect to the periodic signal), and is a trigger for an XY signal to be described later. The XY signal is a lock-in switch signal described above, and is a signal generated by using a reference signal as a trigger. The X signal is a signal having no phase difference from the reference signal. The Y signal is a signal 90 degrees out of phase with the reference signal. The cancel circuit 60 actually generates an X' signal obtained by inverting the X signal and a Y' signal obtained by inverting the Y signal in addition to the X signal and the Y signal. The X signal, the Y signal, the X' signal, and the Y' signal are generated by independent dedicated circuits. Adjusting the phase of the switch signal so that the voltage value of the signal component corresponding to the scattered light becomes the threshold level, that is, continuously shifting the phase of the reference signal with respect to the periodic signal until the output from the cancel circuit 60 becomes 0 V (or a value approximate thereto).

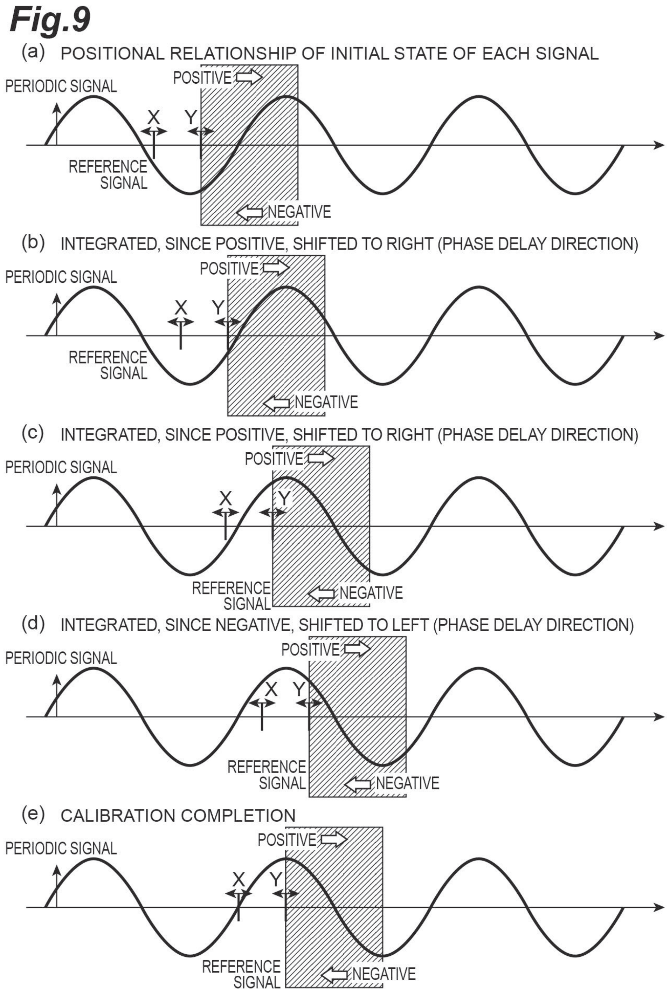

FIG. 9 is a diagram for explaining processing of shifting the phase of the reference signal with respect to the periodic signal and adjusting the output so as to be 0 V. Now, it is assumed that the phase relationship of the initial state of the periodic signal, the reference signal, and the switch signal is the state illustrated in FIG. 9(a). Then, it is assumed that the integration processing is performed in the shaded section in FIG. 9 based on the switch signal, and the output (voltage value of the signal component corresponding to the scattered light) is not the threshold level but a positive value. In this case, as illustrated in FIG. 9(b), the phase of the reference signal is adjusted so as to delay the phase of the switch signal. That is, in the calibration processing, when the voltage value of the signal component corresponding to the scattered light is not the threshold level but a positive value, the cancel circuit 60 adjusts the phase of the switch signal to be delayed.

Now, also in the state of FIG. 9(b) in which the phase of the switch signal has been adjusted, it is assumed that, as a result of the integration processing in the shaded section, the output (the voltage value of the signal component corresponding to the scattered light) is not the threshold level but a positive value. In this case, as illustrated in FIG. 9(c), the phase of the reference signal is adjusted so as to further delay the phase of the switch signal.

Now, also in the state of FIG. 9(c) in which the phase of the switch signal has been adjusted, it is assumed that, as a result of the integration processing in the shaded section, the output (the voltage value of the signal component corresponding to the scattered light) is not the threshold level but a positive value. In this case, as illustrated in FIG. 9(d), the phase of the reference signal is adjusted so as to further delay the phase of the switch signal.

Now, in the state of FIG. 9(d) in which the phase of the switch signal has been adjusted, it is assumed that, as a result of the integration processing in the shaded section, the output (the voltage value of the signal component corresponding to the scattered light) is not the threshold level but a negative value. In this case, as illustrated in FIG. 9(e), the phase of the reference signal is adjusted so as to advance the phase of the switch signal. That is, in the calibration processing, when the voltage value of the signal component corresponding to the scattered light is not the threshold level but the negative value, the cancel circuit 60 adjusts the phase of the switch signal to advance.

Then, as a result of the adjustment to advance the phase of the switch signal, as illustrated in FIG. 9(e), when the output (the voltage value of the signal component corresponding to the scattered light) reaches the threshold level (a value within a predetermined range approximate to 0) as a result of the integration processing in the shaded section, the calibration processing is completed.

When the calibration processing is completed, the cancel circuit 60 receives, as an input, the difference frequency signal corresponding to the detection light including the fluorescence component and the scattered light component (excitation light component) and the switch signal whose phase has been adjusted in the calibration processing, and removes the signal component corresponding to the scattered light component from the difference frequency signal.

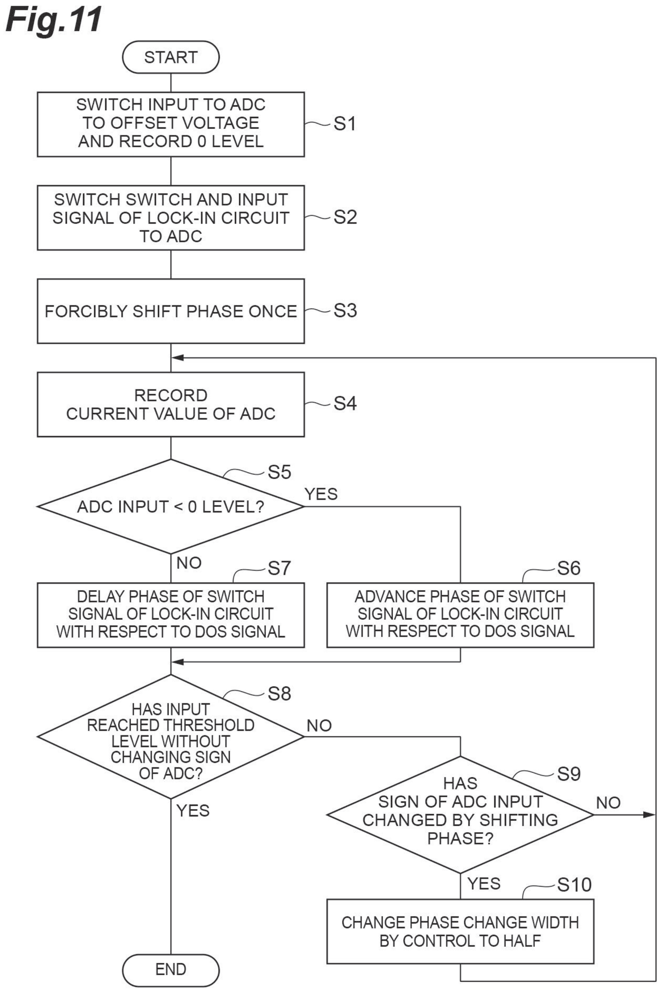

FIG. 11 is a flowchart illustrating calibration processing. As illustrated in FIG. 11, in the calibration processing, first, the input to the AD converter 80 is switched to a predetermined offset voltage, and the 0 level is stored (step S1). Then, the signal of the cancel circuit 60 is input to the AD converter 80 by switching the switch (step S2). In this state, the phase of the reference signal is forcibly shifted once (step S3). The output of the cancel circuit 60 becomes 0 V when the phases of the reference signal with respect to the periodic signal are 0 degrees and 180 degrees. However, in a case where the phases accidentally match 180 degrees in the initial state, the calibration processing is erroneously completed, and the positive and negative of the output signal are inverted. Therefore, there is a case where the output signal cannot be detected depending on the configuration of the subsequent circuit. In this regard, it is possible to prevent the calibration processing from being erroneously completed by forcibly shifting the phase of the reference signal at the start. In addition, by matching the phases at the start in this manner, the positive and negative of the output signal are fixed. As a result, there is no need for a sign bit when an output signal is converted into a digital value, and the dynamic range of the AD converter 80 can be effectively used. In addition, when it is desired to perform measurement with a negative output, the phase of completion of calibration may be set to 180 degrees instead of 0 degrees.

When step S3 is completed, the current input value of the AD converter 80 is recorded (step S4), and loop processing of calibration is executed. First, the current input value of the AD converter 80 is compared with the 0 level, and it is determined whether or not the input value of the AD converter 80 is smaller than the 0 level (negative value) (step S5). When it is determined in step S5 that the input value of the AD converter 80 is a negative value, the phase of the switch signal (that is, the reference signal) of the cancel circuit 60 with respect to the periodic signal according to the frequency of the DDS is advanced (step S6). On the other hand, when it is determined in step S5 that the input value of the AD converter 80 is a positive value, the phase of the switch signal (that is, the reference signal) of the cancel circuit 60 with respect to the periodic signal is delayed (step S7).

Then, it is determined whether or not the input value of the AD converter 80 has reached the threshold level without changing the sign (step S8). When it is determined in step S8 that the sign has not changed and the threshold level has been reached, the calibration processing ends. On the other hand, when it is determined in step S8 that the condition is not satisfied, it is determined whether or not the sign of the input to the AD converter 80 has been changed by shifting the phase (step S9). In a case where it is determined in step S9 that there is no change, the processing of step S4 is performed again. In a case where it is determined that there is a change, the phase change width by the control is changed to half of the current state (step S10), and the processing of step S4 is performed again. The above is the calibration processing.

Next, functions and effects of the optical measurement device 1 described above will be described.

An optical measurement device 1 according to the present embodiment includes a timing generator 70 that outputs a frequency signal, a light source 11 that irradiates an immunochromatography test piece 100 with excitation light, a light source drive circuit 30 that modulates and drives the light source 11 on the basis of a first frequency signal input from the timing generator 70, a detection optical system 20 that detects fluorescence generated from the immunochromatography test piece 100 irradiated with the excitation light and detection light including scattered light, which is light caused by the excitation light, having a phase equal to that of the excitation light, and outputs a detection signal, a frequency conversion circuit 45 that multiplies the detection signal and a second frequency signal input from the timing generator 70 to generate a difference frequency signal that is a signal of a frequency difference between a frequency related to the first frequency signal and a frequency related to the second frequency signal, a cancel circuit 60 that removes a signal component corresponding to scattered light from the difference frequency signal based on the difference frequency signal, and the third frequency signal input from the timing generator 70, in which the third frequency signal is a signal having a frequency corresponding to a frequency related to the difference frequency signal.

In the optical measurement device 1 according to the present embodiment, detection light including fluorescence and scattered light is detected, and a detection signal corresponding to the detection light is multiplied by the second frequency signal to generate a difference frequency signal between the first frequency signal and the second frequency signal. Conventionally, there is known a method for removing a noise component caused by excitation light itself by removing a phase component of excitation light (scattered light) from a detection signal of detection light including fluorescence and scattered light. Here, in a case where the light emission time of the light (fluorescence) to be measured is shortened (a fluorescent reagent having a short fluorescence lifetime is used), and as a result, the speed of the signal processed by the circuit is increased, for example, in a case where the speed of the signal becomes a high speed signal of 10 MHz or more, there is a case where the noise component cannot be appropriately removed only by the above-described method depending on the processing capability of the circuit to be used or the like.

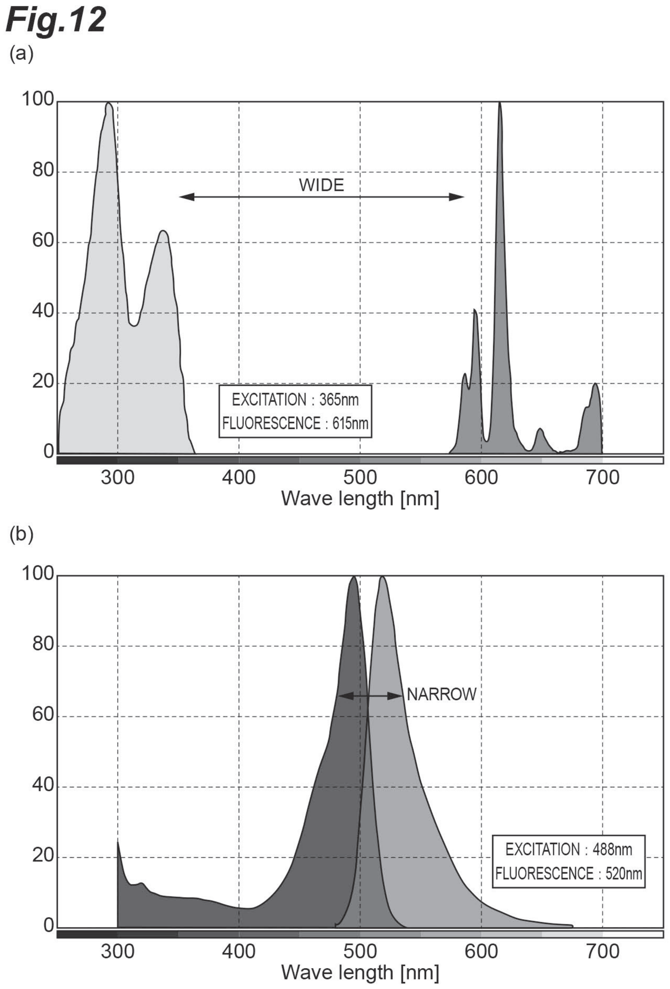

FIG. 12 is a diagram for explaining fluorescence excitation spectra of europium and an organic fluorescent dye (FITC). FIG. 12(a) illustrates wavelength characteristics of excitation light and fluorescence of europium. FIG. 12(b) illustrates wavelength characteristics of excitation light and fluorescence of the organic fluorescent dye. In FIGS. 12(a) and 12(b), the horizontal axis represents wavelength, and the vertical axis represents light intensity. As illustrated in FIG. 12(a), in the case of europium having a relatively long fluorescence lifetime (millisecond level), for example, the wavelength band of the excitation light is around 365 nm, the wavelength band of the fluorescence is around 615 nm, and the modulation rate is about 100 Hz. In this case, since the modulation rate is low and the degree of difficulty in circuit design (processing capability required for the circuit) is not high, it is possible to remove the phase component of the excitation light (scattered light) from the detection signal.

On the other hand, as shown in FIG. 12(b), in the case of an organic fluorescent dye having a relatively short fluorescence lifetime (nanosecond level), for example, the wavelength band of excitation light is around 488 nm, the wavelength band of fluorescence is around 520 nm, and the modulation rate is 10 MHz, which is about 100,000 times that of europium. In this case, since the modulation rate is high and the degree of difficulty in circuit design (processing capability required for the circuit) is high, it may be difficult to remove the phase component of the excitation light (scattered light) from the detection signal. Note that the increase in the difficulty of circuit design is caused not only by a simple problem of processing capability, but also by being susceptible to noise, the multiplication factor being unable to be increased, and the like.

In this regard, in the optical measurement device 1 according to the present embodiment, the detection signal is multiplied by the second frequency signal to generate the difference frequency signal between the first frequency signal and the second frequency signal. Such a difference frequency signal is a sufficiently low-speed signal compared to the detection signal. Then, the difference frequency signal and the third frequency signal are input to the cancel circuit 60, so that a signal component (that is, a noise component caused by the excitation light itself) corresponding to the third light is removed from the difference frequency signal. As described above, the frequency conversion is performed on the detection signal, and the noise component caused by the excitation light itself is removed from the difference frequency signal after the frequency conversion, whereby the noise component can be appropriately removed even for a high-speed signal related to an organic fluorescent dye or the like having a relatively short fluorescence lifetime.

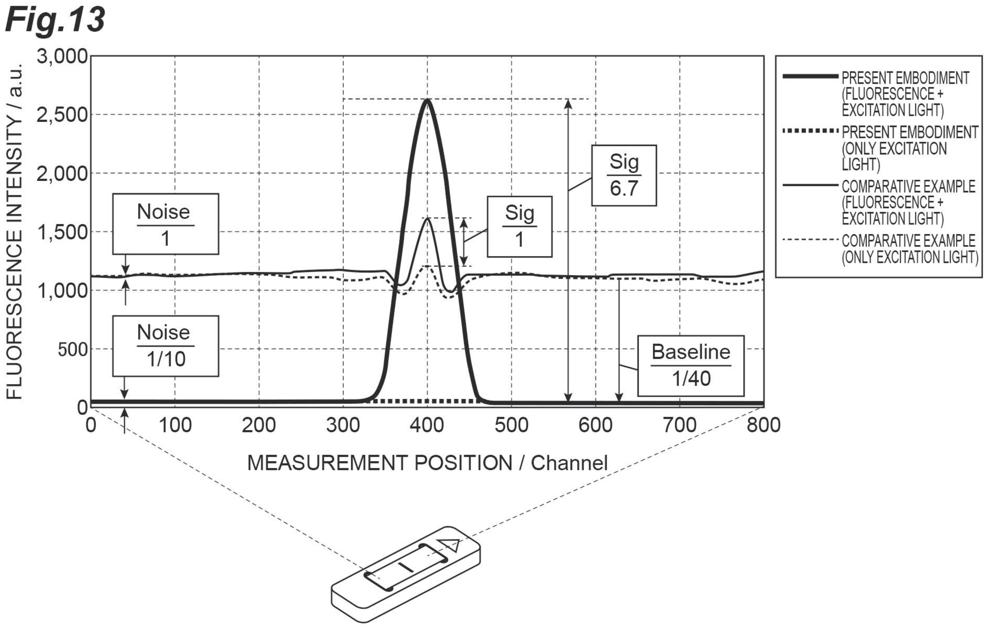

The effect of appropriately removing scattered light (noise) in this manner will be described with reference to FIG. 13. FIG. 13 is a diagram for describing an effect of appropriately removing scattered light (noise). In FIG. 13, the horizontal axis represents the measurement position, and the vertical axis represents the light intensity. A thick solid line is a result (measurement result of fluorescence and excitation light) in a case of measuring a sample in which an organic fluorescent dye (FITC) is injected as a fluorescent reagent into a microchannel on a light scatterer in the configuration according to the present embodiment, a broken line is a result (measurement result of only excitation light) in a case of measuring a sample in which a diluent not containing a fluorescent reagent is injected into a microchannel on a light scatterer in the configuration according to the present embodiment, a thin solid line is a result (measurement result of fluorescence and excitation light) in a case of measuring a sample in which an organic fluorescent dye (FITC) is injected as a fluorescent reagent into a microchannel on a light scatterer in the configuration according to the comparative example, and a dotted line is a result (measurement result of only excitation light) in a case of measuring a sample in which a diluent not containing a fluorescent reagent is injected into a microchannel on a light scatterer in the configuration according to the comparative example. The difference between the thick solid line and the broken line is the fluorescence amount (signal) in the present embodiment, and the difference between the thin solid line and the dotted line is the fluorescence amount (signal) in the comparative example. As indicated by the thin solid line and the dotted line in FIG. 13, in the configuration of the comparative example, the baseline rises due to the background (BKG) of the excitation light (scattered light). On the other hand, as indicated by the thick solid line and the broken line in FIG. 13, in the configuration according to the present embodiment, the baseline does not rise even if the excitation light is scattered to the light scatterer, and thus, only the minimum offset for the soft processing (processing of making all the values of the signals positive) is performed. Then, as compared with the measurement result of the configuration according to the comparative example, the noise is about 1/10, and the signal is about 6.7 times. As described above, since the offset amount of the base line is small when the noise is removed, the excitation light amount from the light source and the amplification factor of the I-V conversion amplifier and the photomultiplier tube can be increased, and the signal intensity can be suitably increased. As a result, the S/N can be improved about 70 times as compared with a case where noise removal is not performed.

In the optical measurement device 1 according to the present embodiment, the first light is excitation light that excites the sample, the second light is fluorescence emitted from the sample according to the excitation light, and the third light includes at least one of the excitation light and scattered light of the excitation light. As a result, the signal component corresponding to at least one of the excitation light and the scattered light of the excitation light can be appropriately removed from the difference frequency signal corresponding to the detection signal including the fluorescence and the signal component corresponding to at least one of the excitation light and the scattered light of the excitation light, and only the signal component corresponding to the fluorescence can be appropriately extracted.

The frequency related to the difference frequency signal may be a frequency within a range of 10 Hz to 1 MHz. By setting the frequency of the difference frequency signal within such a range, it is possible to suppress an increase in the frequency related to noise removal and to appropriately remove a noise component.

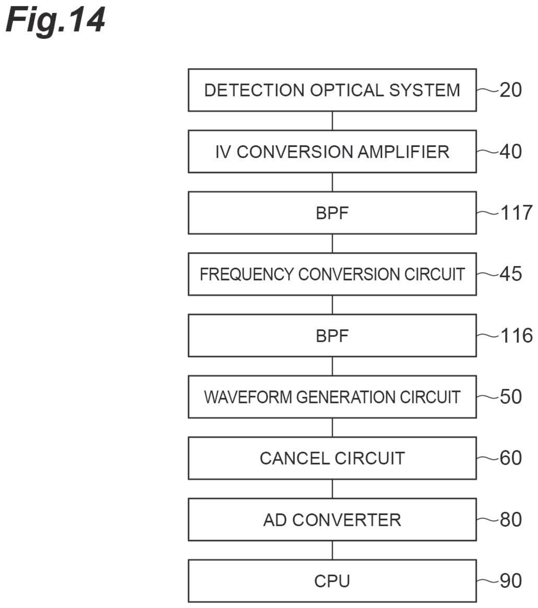

Although the optical measurement device 1 according to the present embodiment has been described above, the configuration according to the present disclosure is not limited to the optical measurement device 1. For example, as illustrated in FIG. 14, frequency filters may be provided on the input side and the output side of the frequency conversion circuit 45..

In the example illustrated in FIG. 14, a band pass filter 117 (BPF) that is a first frequency filter is provided on the input side (between the I-V conversion amplifier 40 and the frequency conversion circuit 45) of the frequency conversion circuit 45, and a band pass filter 116 (BPF) that is a second frequency filter is provided on the output side (between the frequency conversion circuit 45 and the waveform generation circuit 50) of the frequency conversion circuit 45. As described above, by using the band pass filter 117, it is possible to selectively pass only a desired frequency band (for example, 10.01 MHz), and it is possible to more appropriately suppress noise from being included and to suppress the rise of the baseline described above.

The optical measurement device according to the present disclosure can be applied to various applications. The optical measurement device according to the present disclosure may be applied to, for example, a measurement optical system of a flow cytometer. By being applied to fluorescence measurement in a flow cytometer, it is possible to selectively acquire only fluorescence by canceling excitation light (and scattered light). Usually, it is difficult to remove the excitation light in the miniaturized flow cytometer, which is a problem. However, by canceling the excitation light by the optical measurement device according to the present disclosure, the flow cytometer can be appropriately miniaturized. Similarly, the optical measurement device according to the present disclosure may be applied to a microplate reader, PCR, a microscope, HPLC, or the like.

Finally, various exemplary embodiments included in the present disclosure are described in the following [E1] to [E6].

### [E1]

An optical measurement device, including:
a timing generator configured to output a frequency signal;
a light source unit configured to irradiate a sample with first light;
a light source drive circuit configured to modulate and drive the light source unit based on a first frequency signal input from the timing generator;
a light detection unit configured to detect detection light including second light generated from the sample irradiated with the first light and third light, which is light caused by the first light, having a phase equal to that of the first light, and output a detection signal;
a frequency conversion circuit configured to calculate the detection signal and a second frequency signal input from the timing generator to generate a difference frequency signal that is a signal of a frequency of a difference between a frequency related to the first frequency signal and a frequency related to the second frequency signal; and
a signal processing unit configured to remove a signal component corresponding to the third light from the difference frequency signal based on the difference frequency signal and a third frequency signal input from the timing generator, in which
the third frequency signal is a signal having a frequency corresponding to a frequency related to the difference frequency signal.

### [E2]

The optical measurement device according to [E1], in which
the first light is excitation light for exciting the sample,
the second light is fluorescence emitted by the sample in response to the excitation light, and
the third light includes at least one of the excitation light and scattered light of the excitation light.

### [E3]

The optical measurement device according to [E1] or [E2], in which the frequency related to the difference frequency signal is a frequency within a range of 10 Hz to 1 MHz.

### [E4]

The optical measurement device according to any one of [E1] to [E3], further including: a first frequency filter provided on an input side of the frequency conversion circuit; and a second frequency filter provided on an output side of the frequency conversion circuit, in which the first frequency filter and the second frequency filter are band pass filters.

### [E5]

An optical measurement method, including:
irradiating the sample with first light based on a first frequency signal;
detecting detection light including second light generated from the sample irradiated with the first light and third light, which is light caused by the first light, having a phase equal to that of the first light, and outputting a detection signal;
calculating the detection signal and a second frequency signal to generate a difference frequency signal that is a signal of a frequency of a difference between a frequency related to the first frequency signal and a frequency related to the second frequency signal; and
removing a signal component corresponding to the third light from the difference frequency signal based on the difference frequency signal and a third frequency signal, in which
the third frequency signal is a signal having a frequency corresponding to a frequency related to the difference frequency signal.

### Reference Signs List

- 1: optical measurement device
- 10: irradiation optical system (light source unit)
- 20: detection optical system (light detection unit)
- 30: light source drive circuit
- 45: frequency conversion circuit
- 60: cancel circuit (signal processing unit)
- 70: timing generator.

## Claims

1. An optical measurement device, comprising:
a timing generator configured to output a frequency signal;
a light source unit configured to irradiate a sample with first light;
a light source drive circuit configured to modulate and drive the light source unit based on a first frequency signal input from the timing generator;
a light detection unit configured to detect detection light including second light generated from the sample irradiated with the first light and third light caused by the first light and having a phase equal to that of the first light, and output a detection signal;
a frequency conversion circuit configured to calculate the detection signal and a second frequency signal input from the timing generator to generate a difference frequency signal that is a signal of a frequency of a difference between a frequency related to the first frequency signal and a frequency related to the second frequency signal; and
a signal processing unit configured to remove a signal component corresponding to the third light from the difference frequency signal based on the difference frequency signal and a third frequency signal input from the timing generator, wherein
the third frequency signal is a signal having a frequency corresponding to a frequency related to the difference frequency signal.

2. The optical measurement device according to claim 1, wherein
the first light is excitation light for exciting the sample,
the second light is fluorescence emitted by the sample in response to the excitation light, and
the third light includes at least one of the excitation light and scattered light of the excitation light.

3. The optical measurement device according to claim 1, wherein a frequency related to the difference frequency signal is a frequency within a range of 10 Hz to 1 MHz.

4. The optical measurement device according to claim 1, further comprising: a first frequency filter provided on an input side of the frequency conversion circuit; and a second frequency filter provided on an output side of the frequency conversion circuit, wherein the first frequency filter and the second frequency filter are band pass filters.

5. An optical measurement method, comprising:
irradiating a sample with first light based on a first frequency signal;
detecting detection light including second light generated from the sample irradiated with the first light and third light caused by the first light and having a phase equal to that of the first light, and outputting a detection signal;
generating a difference frequency signal that is a signal of a frequency of a difference between a frequency related to the first frequency signal and a frequency related to the second frequency signal by calculating the detection signal and the second frequency signal; and
removing a signal component corresponding to the third light from the difference frequency signal based on the difference frequency signal and a third frequency signal, wherein
the third frequency signal is a signal having a frequency corresponding to a frequency related to the difference frequency signal.
